# EUROPEAN PATENT SPECIFICATION

(11) **EP 2 146 865 B1**
(45) Date of publication and mention of the grant of the patent: **13.09.2017**
(21) Application number: 07729243.1
(22) Date of filing: 16.05.2007
(51) Int. Cl.: B60M 1/30

(54) **A POWER SUPPLY RAIL INSULATOR**
ISOLATIONSTRÄGER FÜR STROMSCHIENEN
ISOLATEUR DE RAIL D'ALIMENTATION ÉLECTRIQUE

(43) Date of publication of application: 27.01.2010
(73) Proprietor: Dextra China Limited, Hong Kong (CN)
(72) Inventor: BERNARD, Francis Edouard, 59134 Herlies (FR); MACDONALD, William Bruce, Mississauga, Ontario L5L 2R3 (CA)
(74) Representative: Appleyard Lees IP LLP
(86) International application number: PCT/EP2007/054795
(87) International publication number: WO 2008/138401

(56) References cited:
- EP-A1- 0 549 919
- FR-A- 1 384 127
- FR-A- 2 584 350
- GB-A- 1 284 173

## Description

The present invention relates to a power supply rail insulator, methods of installing and removing the same, a power supply rail insulator assembly and a power supply rail insulator kit.

Many track bound transport means, such as railways, employ a power supply rail (commonly referred to as a "third rail") as a method of providing electricity to power the track bound vehicle. Third rails usually comprise a continuous rigid conductor mounted alongside a railway track and are used typically in mass transit or rapid transit systems. In use, a collector shoe situated on the track bound vehicle slides over the third rail and draws electricity therefrom. It is also known to use third rails to guide track bound vehicles (especially where the vehicles run on tyres).

Third rails are supported above a surface to which they are attached by insulators spaced at about one every 1 to 3 metres along the length of the power supply rail. The spacing will be affected and determined by well-known factors, such as weight loading, ground firmness and whether a particular section of rail is curved or straight. Insulators used on curved sections of rail generally have to withstand larger loads than insulators used on straight sections of rail, and so are placed closer together. The insulators have three main functions. Firstly, the insulators should maintain the third rail at a correct height to ensure full and constant contact with the sliding shoe; secondly, the insulators should isolate the electrically charged third rail from the surface to which the rail is attached to ensure optimum distribution of current; thirdly the insulators should offer structural support to the third rail to allow the power supply rail to optionally guide vehicles.

Insulators are subject to adverse influences from the environment such as dust from a vehicles brakes, water and wear and tear. These influences cause the aging process of insulators to be accelerated and therefore insulators are required to be regularly serviced to check for structural integrity and insulating properties. If an insulator has become deficient, then it is required to be replaced. However, in order to remove an insulator from the surface to which it is secured, it is necessary to lift the third rail as much as 7 to 10cm with hydraulic jacks. In order to prevent damage to the third rail or adjacent insulators, it is required to loosen the third rail from the 2 or 3 adjacent insulators, each side of the deficient insulator. This operation is tedious and time consuming and requires heavy industrial lifting equipment. A prior art insulator is disclosed in EP0549919A. It is an object of aspects of the present invention to address the above or other problems.

According to a first aspect of the present invention there is provided a power supply rail insulator comprising a base member adapted to be securable to an anchoring surface; an upper member adapted to allow a power supply rail to be securable thereto; wherein the base member and the upper member are arranged to be detachably secured to each other. When the base member and the upper member are unsecured to each other, the upper member may be longitudinally disengagable from the base member, preferably, longitudinally slidably disengagable.

Preferably, the base member and the upper member comprise cooperating mating surfaces operable to allow the upper member and the base member to engage. When the upper member and the base member are engaged, this may be referred to as an assembled configuration. The assembled configuration may be secured or unsecured.

Preferably, the mating surfaces extend longitudinally, with regard to the longitudinal axis of the power supply rail.

Preferably, the mating surfaces comprise means to prevent movement therebetween in at least one lateral direction. Preferably, in an assembled, unsecured configuration, the upper member and base member are operable for disassembly by relative longitudinal movement.

References herein to "longitudinal", refer to a longitudinal axis of the power supply rail.

Preferably, an upper surface of the base member comprises a mating surface adapted to engage a mating surface of the upper member.

Preferably, a lower surface of the upper member comprises a mating surface adapted to engage a mating surface of the base member.

Preferably, the base member has a generally constant cross section. Preferably, the upper member has generally constant cross section.

Preferably, the engaging mating surfaces of the base member and the upper member comprise a shoulder section.

Preferably, the cooperating mating surfaces of the base member and the upper member are inclined with regard to a lower face of the base member.

Preferably, the base member comprises opposing side walls. Preferably, a first side wall extends higher than a second side wall. Preferably, in use, the first side wall is arranged proximal to a track upon which a vehicle runs.

Preferably, the base member comprises apertures therein, operable allow the upper member to be detachably secured thereto.

Preferably, the upper member comprises apertures therein, preferably, in an upper face thereof, to allow a power supply rail to be secured thereto.

Preferably, the upper member comprises apertures therein, operable to allow the upper member to be detachably secured to the base member. Preferably, the apertures comprise a recessed flange therearound.

Preferably, the upper member comprises side walls, which side walls preferably comprise a taper section whereby the walls taper toward an upper region of the upper member.

Preferably, the upper region of the upper member is operable, is use, to be accommodated within a profile of a power supply rail.

Preferably, at least one of the side walls of the upper member comprises a chamfer at a lower edge thereof.

Preferably, at least one of the side walls of the upper member comprises a chamfer along an upper edge thereof. Preferably, the at least one side wall is a wall that is arranged generally parallel to a longitudinal axis of the power supply rail, in use. Preferably, two side walls of the upper member comprise a chamfer along an upper edge thereof. Preferably, the two side walls are walls that are arranged generally parallel to a longitudinal axis of the power supply rail, in use.

For the avoidance of doubt, reference herein to a "third rail" refers to any rail on or proximal to a running surface of a track bound vehicle that provides power to and/or guides the track bound vehicle. It is irrelevant whether the track bound vehicle runs on 1, 2, 3, or more tracks or rails. In other words, the "third rail" does not necessarily require two other rails for it to be classified as the "third".

According to a further aspect of the present invention there is provided a power supply rail insulator assembly comprising a power supply rail insulator comprising a base member secured to an anchoring surface; an upper member secured to a power supply rail; wherein the base member and the upper member are detachably secured to each other.

Preferably, the base member and the upper member are detachably secured together with bolts and, preferably, coupling members corresponding to the said bolts.

According to a further aspect of the present invention there is provided a method of assembling a power supply rail insulator comprising:
- detachably securing an upper member of a power supply rail insulator to a base member of a power supply rail insulator device.

Preferably, the method comprising aligning the upper member with the base member by relative sliding of the members.

The method may further comprise securing a base member to an anchoring surface, which may be a preliminary method step.

The method may further comprise securing a power supply rail to the upper member, which step may be a subsequent step.

According to a further aspect of the present invention there is provided a method of disassembling a power supply rail insulator comprising:
- detaching a secured upper member of a power supply rail insulator and a base member of a power supply rail insulator.

Preferably, the method comprises, after detaching the members,
- sliding the base member and the upper member relative to each other.

The method may also comprise unsecuring a power supply rail from the upper member, which may be a preliminary method step.

The method may also comprise unsecuring the base member from an anchoring surface, which may be a subsequent method step.

According to a further aspect of the present invention there is provided a power supply rail insulator kit comprising a power supply rail insulator comprising a base member adapted to be securable to an anchoring surface; an upper member adapted to allow a power supply rail to be securable thereto; wherein the base member and the upper member are arranged to be detachably secured to each other; the kit further comprising fixing means operable to detachably secure the base member and the upper member to each other.

The kit may further comprise fixing means operable to secure the base member to an anchoring surface.

The kit may further comprise fixing means operable to secure a power supply rail to the upper member.

All of the features disclosed herein may be combined with any of the above aspects and in any combination.

For a better understanding of the invention, and to show how embodiments of the same may be carried into effect, reference will now be made, by way of example, to the accompanying diagrammatic drawings in which:
Figure 1 shows an exploded view of a power supply rail insulator assembly;
Figure 2 shows a front perspective view of a power supply rail insulator in an assembled configuration;
Figure 3a shows a side perspective view of a base section of a power supply rail insulator;
Figure 3b shows an opposite side perspective view of the base section of a power supply rail insulator;
Figure 4 shows a perspective view of an upper section of a power supply rail insulator;
Figure 5 shows a side view of a base section of an insulating device; and
Figure 6 shows a partial cross sectional view of the interface between a base section and an upper section of a power supply rail insulator in an assembled configuration.

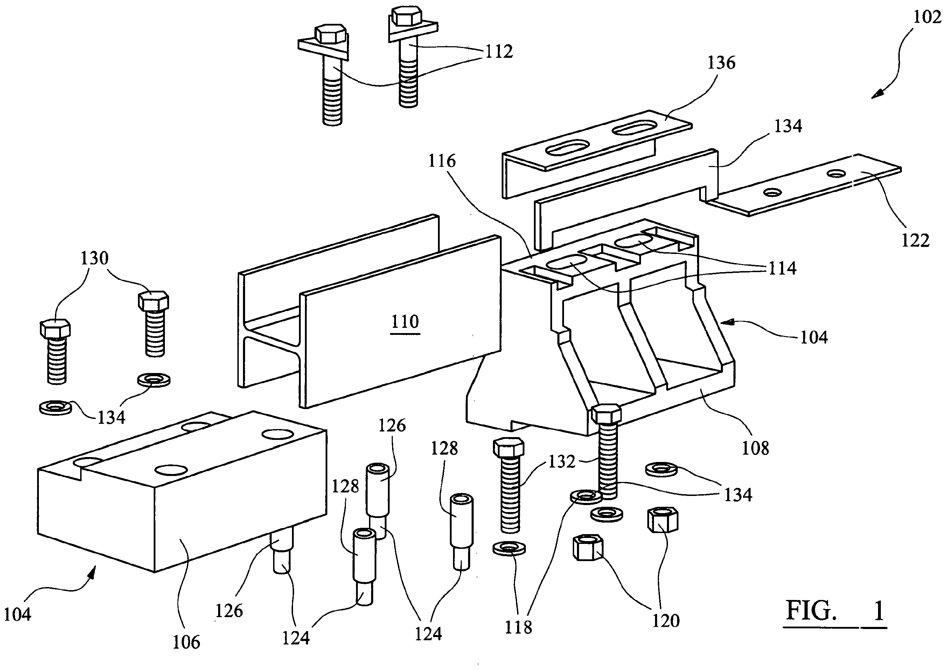

Referring to figure 1 there is shown an exploded view of a power supply rail insulator assembly 102 which comprises a power supply rail insulator 104 of the present invention and various other articles to allow the device to secured together and installed adjacent a track, as will be described hereunder.

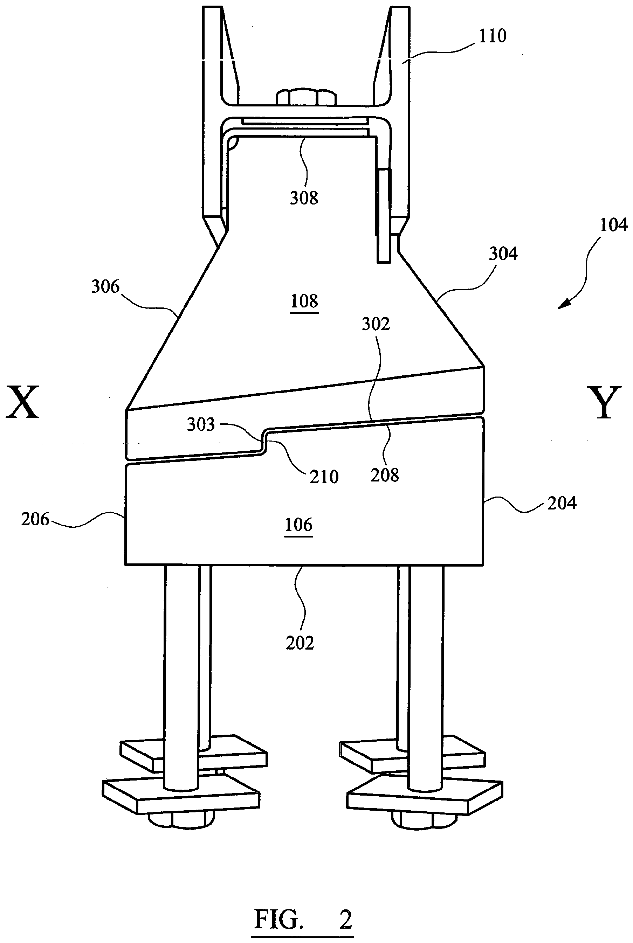

The insulator 104 comprises two blocks, being a lower block 106 and an upper block 108. The lower block 106 is operable in use to rest on and be secured to (anchored to) the track slab (not shown) and is referred to hereunder as the base block. The upper block 108 is operable in use to have a power supply rail 110 fixed to an upper surface thereof (see figure 2).

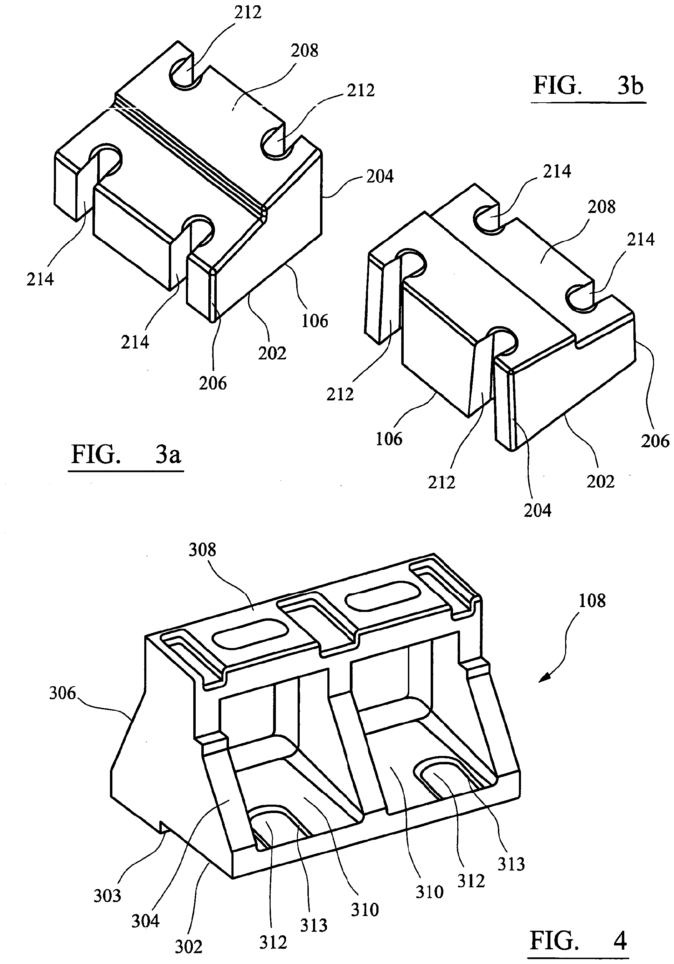

Referring now also to figures 2, 3a, 3b and 4, the base block 106 has a generally constant cross section and has a flat lower face 202, generally parallel opposing side walls 204, 206 and an upper face 208. The upper face 208 slopes gently downward from a first of the side walls 204 to a second of the side walls 206, the slope is about 5° from parallel with the lower face 202. About 65% of the way toward the second side wall 206, the upper face 208 comprises a shoulder section 210, where the upper face 208 deviates from its gently sloping path to have a short downward extension (extending toward the lower face) before returning to its previous gently sloping path.

The base block has apertures 212, 214 extending therethrough from the upper face 208 to the lower face 202, generally parallel with the side walls 204, 206, to allow it to be secured (anchored) to the track slab (not shown) and to allow the upper block 108 to be secured thereto.

The upper block 108 also has a generally constant cross section (except for cut away sections described below) and has a lower face 302 having a profile corresponding to the upper face 208 of the base block 106, such that, in use, when the upper block 108 is situated on top of the base block 106, the lower surface 302 of the upper block 108 closely accommodates the upper surface 208 of the base block 106 (see figure 2). Therefore, the lower face 302 has a corresponding shoulder section 303. The upper block 108 has side walls 304, 306 that extend upward from the lower surface 302, at first being parallel with each other before inwardly tapering toward an upper region, before becoming parallel again. An upper face 308 of the upper block is generally flat. The junction between the side walls 304, 306 and the upper face 308 is chamfered to facilitate easy replacement of the upper block 108, without the need to remove the power supply rail 110 as will be described below.

The upper block 108 comprises two cut away sections 310 in each of the side walls thereof to allow access to apertures 312 extending through the lower surface 302 thereof, which allow the upper block 108 to be secured to the base block 106, in use. The apertures 312 have recessed flanges 313 therearound. The upper block 108 also has apertures 114 extending into the upper face 308 thereof, which allow bolts 112 to secure the power supply rail 110 thereto, in use.

The power supply rail 110 is manufactured from a conductive material such as steel and aluminium. Some power supply rail systems use standard profiles available directly from the mills (H, I...), while others prefer a proprietary design, usually a combination of two materials in order to optimize conductivity, wear and tear and cost. In use, the power supply rail is bolted to the upper block 108, by means of two bolts 112 which extend through apertures (not shown) in the power supply rail 110 and through apertures 114 in an upper surface 116 of the upper block 108 and are secured by washers 118 and "stop nuts" 120. To distribute the load evenly between the two bolts 112 an intermediary plate 122 is generally inserted.

Referring again to figure 1, in use, the insulator assembly 102 is anchored into the concrete track slab (not shown) below the tracks by means of threaded inserts 124 embedded directly into the concrete. The threads are isometrics. Proprietary designed couplers 126, 128 provide the necessary connection between these inserts 124 and the fixation devices of the insulating device 104 (described hereunder).

The insulator 104 is positioned so that the shorter wall 206 is proximal to the track upon which the vehicle travels, while the higher wall 204 is distal to the track. This is indicated on figure 2 with the letter "X" representing "track side" and the letter "Y" representing "non-track side".

The gently sloping profile of the upper surface 208 of the base block 106 means that the length of the couplers 126, 128 may not be identical on both sides of the shoulder section 210.

In the present illustration the couplers 126 on the track side "X" are shorter than the couplers 128 on the non-track side "Y". If a steel base plate (not shown) is provided the operator may decide to point weld the couplers 126,128 onto this plate to ensure that they will not come loose. The apertures 212, 214 provided in the insulator base 106 have a special profile matching that of the couplers 126, 128. Each coupler 126, 128 is machined with two flanges on the side. When the insulator base 106 is put in position, the flanges should match those provided inside the recess. This is to ensure that the couplers 126, 128 will not come loose during assembly, thus always maintaining the minimum required length of threads engaged. All couplers 126, 128 are manufactured with high tensile steel. Special attention has been brought to the ductility performance in the selection of the raw material. All couplers 126, 128 are designed to guarantee that under tensile stresses the bolts will always break before the coupler assembly does. The cross section area of the couplers 126, 128 is such that under shear stresses again the bolts will shear off before the coupler does. This is important since the bolts 130, 132 and the threaded inserts 124 may not always butt inside the couplers 126, 128.

When installing the base block 106 of the insulator 104, the operator must always ensure that the lower section of the upper face 208 is always closest to the tracks (not shown). The base block 106 is secured in place by bolts 130, 132 which extend through apertures 312 in the lower surface 302 of the upper block 108 into threaded internal recesses in the couplers 126, 128.

Once the base block 106 of the insulator 104 is secured in place, the upper block 108 can be positioned. For a first installation, since the power supply rail 110 is not yet in place, the operator can simply translate vertically the two parts 106, 108 on top of each other.

To replace an insulator 104, assuming that the power supply rail 110 is already in position and secured to the neighbouring insulators, the operator removes the bolts 112 that secure the power supply rail to the insulator 104. The bolts 130, 132 are also removed from the couplers 126, 128, thus the base block 106 and the upper block are no longer secured together, but remain in an assembled configuration. The operator then translates the upper block 108 sideways i.e. longitudinally with respect to the power supply rail (and in the present embodiment the insulator 104, since both share a longitudinal axis). In this manner, the upper block 108 slides over the base block 106 until the upper block 108 is remote from the base block 106 and the insulator 104 is in a disassembled configuration. Once the insulator is disassembled, the base block 106 may then be removed from the track slab by lifting the block 106 off the couplers. Removal of the upper block 108 from underneath the power supply rail 110 depends on the particular geometry of the upper block 108 and the power supply rail 110. In some instances, where the upper block 108 is not very tall or where the vertical flanges of the power supply rail 110 do not extend too far downward, the upper block 108 may be simply removed unhindered from under the third rail 110. However, in a situation where the upper block 108 is particularly high or the vertical flanges of the power supply rail 110 extend downward a long way, then removal of the uppoer block 110 may be effected by rotation thereof (about an axis generally parallel to the longitudinal axis of the power supply rail 110). Removal in this manner is facilitated by the chamfered corners of the side walls 304, 306 where they meet the upper face 308 of the upper block 108.

In this manner, the insulator 104 may be replaced without the need to remove or loosen adjacent insulators and without the need to raise the power supply rail 110. Furthermore, the insulator of the present invention allows an operator to selectively replace the upper block 108 or the lower block 106, where only one section has failed. This is particularly advantageous since, in some uses, the base block 106 may be known to have a far longer serviceable life than the upper block 108, for example.

To secure the upper block 108 to the lower block 106, high tensile bolts 130-132 are pushed through the apertures 312 and screwed into the couplers 126, 128 through openings therein. Washers 134, preferably of a proprietary locking type are inserted in between the bolt head and the flange 313 on the upper part 108 of the insulator 104. It is recommended to tighten all bolts 130, 132 with a calibrated torque wrench to ensure that all bolts are tightened with an identical force. This allows an even distribution of the stresses induced by the train while preventing excessive loading in one or more bolts. Any unbalance may create a risk of accidental failure as a result of excessive loading and/or premature fatigue. Tightening in this manner also ensures maximum friction between the matching faces 208, 302 of the two parts 106, 108 of the insulator 104. This is one of the innovations pertaining to the invention. Further, this tightening regimen provides that part of the longitudinal and lateral forces induced by the track bound vehicle (train for example) are transformed into tensile stresses into the bolts 130, 132. Consequently, the stresses inside both parts 106, 108 of the insulator 104 are reduced. This in turn allows the optimization of the weight/cost of the insulator while extending notably its service life. A further benefit of tightening in this manner is that the bolts 130, 132 will not come loose, despite the repeated vibrations induced by the train hence reducing the risk of accident.

Shim plates 134 are installed in between the power supply rail 110 and the upper block 108 of the insulator 104, where required, to compensate for any misalignment and to cushion the impact of the passing train.

A sliding plate 136 made of plastic allows the thermal expansion and contraction of the power supply rail 110 without imposing any stresses on the insulator 104. These plates 136, 122 are necessary since the thermal expansion ratios of steel and FRP are significantly different.

Should the insulators 104 be installed outdoors, thus subject to greater variation of temperatures, the operator might prefer to have 'oblong' apertures 312. In such case, matching inserts with round holes should be inserted when there is a need for the rail and the insulator 104 to remain securely and tightly engaged.

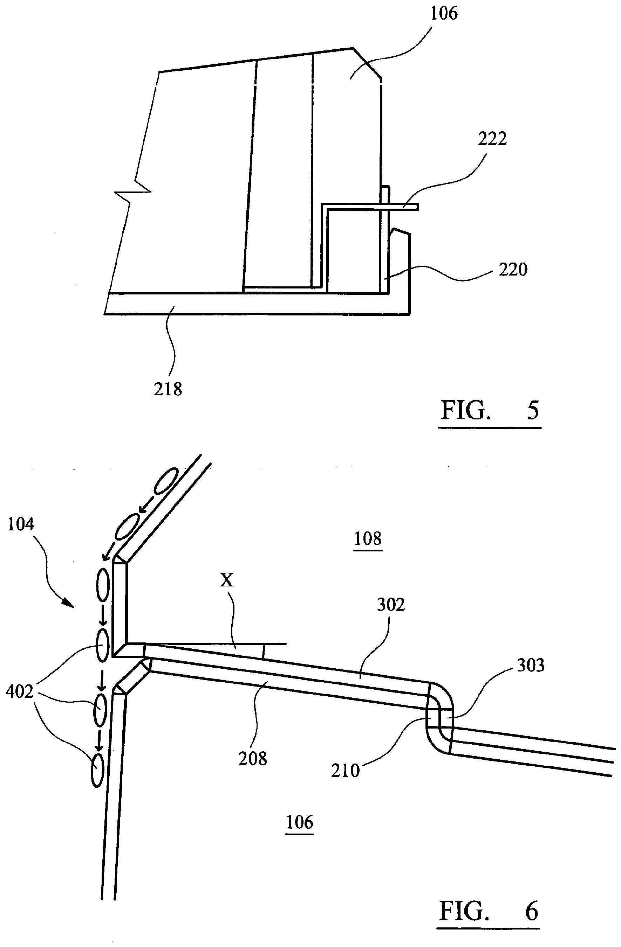

Figure 5 shows an side view of the base block 106 of the insulator 104. In this embodiment, the base block 106 is secured to a metal base plate 218 and has a spacing shim plate 220, which is held by a bracket 222 to prevent upward movement thereof. The bracket 222 is secured in place by the same bolt that attached the base block 106 to the base plate 218.

The operator may request that all the above described hardware be protected against weathering/rusting by means of zinc coating or electroplating. Special caps may be added to avoid accumulation of dust around the head of the bolts 130, 132, 112. The operator may consider filling these caps with petroleum wax to facilitate later dismantling. In difficult service conditions or in case the voltage/intensity of the system are increased, these caps would provide an effective deflection to avoid accidental flash-over.

The flanges 313 surrounding the fixing holes 312 are designed with some inclination (angle β) to ensure that water and dust will not accumulate and possibly seep along the bolts 130, 132 into the couplers 126, 128.

The upper face 208 of the base 106 and the lower face 302 of the upper block 108 are inclined. The angle (α, as shown in figure 6) serves two purposes. Firstly it increases the area of contact between the two blocks 106, 108 allowing an optimum transfer of the loads and stresses induced by the train onto the power supply rail 110 and the insulator 104. Secondly, it transforms longitudinal and rotational loads applied by the train onto the power supply rail 110 into vertical stresses. These are turned into compression loads between the two blocks 106, 108 and into tensile loads onto the bolts 130, 132. This is particularly important since the properties of the polymer from which the insulator 104 is formed are best under compression as opposed to shear. The mating surfaces 208, 302 of the two blocks 106, 108 must be accurately manufactured and finished, thus ensuring a perfect matching and optimum friction once the bolts 130, 132 are tightened. The precision of the mould and the surface finish of the insulators 104 are critical elements in the design of the manufacturing of the insulator 104. Uneven surfaces and varying angles would create point loadings possibly resulting in excessive abrasion, puncture and premature failure.

The corresponding shoulder sections 210, 303 serve two purposes. First it guides the two parts 106, 108 of the insulator 104 when they are installed on top of each other. Thanks to the shoulder 210, 303, the operator knows for sure that the fixing holes 312 and 212, 214 are properly aligned without any further visual check. Therefore, the assembly of the two parts 106, 108 of the insulators 104 and the engagement of the bolts 130, 132 is quick and easy, thus saving time to the contractor and the operator. Secondly, the shoulder 210, 303 creates a mechanical stop absorbing part of the lateral forces induced by the train, thus reducing the amount of shear stresses into the insulator 104.

The insulator 104 is made of a combination of fibers, resins, fillers and catalysts that are compression molded and controlled cured. Glass fibers are most commonly selected for their excellent electrical insulation properties. Basalt fibers, although more expensive, offer an improved durability. Resins, catalysts and fillers are chosen on one hand to optimize the mechanical properties of the finished product and on the other hand to facilitate the forming of the insulator. Most commonly, resins and fibers are combined in a so called Sheet Molding Compound (SMC) in order to speed up the laying of the materials in the moulds, thus increasing productivity and to control accurately the placement and alignment of the fibers at the critical locations, thus guaranteeing the expected mechanical performances of the polymer. Further the SMC ensures a consistent dosage of the various components.

To improve the "weather-ability" of the insulator 104, i.e. their capacity to self clean when exposed to running water (rain and seepage), a coating can be added to the surface of the insulator 104. The coatings are either applied to the outer face of the molds before the SMC is placed, or they can be applied after the insulator 104, has been formed. Silicone is a readily available option. Such coating would prevent the accumulation of dusts on the surface of the insulator 104 that might create a path for leaking current, thus minimizing the risk of a flash-over. Effective cleaning with a high pressure water jet would become even easier thus simplifying maintenance and allowing the operator to leave the insulators 104 in service for a longer period of time.

The corner of the side wall 204 and the upper face 208 of the base block 106 is fitted with a simple but effective anti dripping design, whereby, the corner is chamfered. This feature ensures that the water 402 (see figure 6) seeping down the insulator 104 will drip directly from the upper 108 to the lower 106 part without having the possibility to seep in between the mating surfaces 208, 302. This feature reduces the risk of corrosion of the fixing bolts 130, 132 and couplers 126, 128 as well as to prevent the accumulation of dust in between the two faces 208, 302 of the insulators. Such dust might increase the friction between the two parts 106, 108 and complicate the removal of the insulator.

An insulator 104 and insulator assembly 102 as described herein has the benefit that the insulator may be replaced without the need to loosen or remove adjacent insulators or lift the power supply rail. Furthermore, an operator can selectively replace a section of the insulator that has become faulty.

## Claims

1. A power supply rail insulator (104) comprising a base member (106) adapted to be securable to an anchoring surface; an upper member (108) adapted to allow a power supply rail (110) to be securable thereto; wherein the base member (106) and the upper member (108) are arranged to be detachably secured to each other,
**characterised in that** the upper member (108) and the base member (106) are each made from an insulating material; wherein when the base member (106) and the upper member (108) are unsecured to each other, the upper member (108) is longitudinally disengageable from the base member (106).

2. A power supply rail insulator according to claim 1, wherein the base member and the upper member comprise cooperating mating surfaces operable to allow the upper member and the base member to engage.

3. A power supply rail insulator according to claim 2, wherein the mating surfaces extend longitudinally, with regard to a longitudinal axis of the power supply rail.

4. A power supply rail insulator according to either of claim 2 or claim 3, wherein the mating surfaces comprise means to prevent movement therebetween in at least one lateral direction.

5. A power supply rail insulator according to any preceding claim, wherein, in an assembled, unsecured configuration and with a power supply rail inhibiting upwards movement of the upper member, the upper member and base member are able to be separated by relative longitudinal movement.

6. A power supply rail insulator assembly comprising a power supply rail insulator comprising a base member secured to an anchoring surface; an upper member secured to a power supply rail; wherein the base member and the upper member are detachably secured to each other,
**characterised in that** the upper member and the base member are each made from an insulating material; wherein when the base member and the upper member are unsecured to each other, the upper member is longitudinally disengeagable from the base member.

7. A power supply rail insulator assembly as claimed in claim 6 in which the base member and the upper member include, at their surfaces that face and cooperate with each other, an upwardly inclined surface over at least part of the facing surfaces, which incline extends upwardly in the same direction that a conductor is arranged to be brought into engagement with the power supply rail.

8. A method of assembling a power supply rail insulator comprising:
- detachably securing an upper member of a power supply rail insulator to a base member of a power supply rail insulator device,
**characterised in that** the upper member and the base member are each made from an insulating material; wherein when the base member and the upper member are unsecured to each other, the upper member is longitudinally disengeagable from the base member.

9. A method as claimed in claim 8 comprising aligning the upper member with the base member by relative sliding of the members.

10. A method of disassembling a power supply rail insulator comprising:
- detaching a secured upper member of a power supply rail insulator and a base member of a power supply rail insulator,
**characterised in that** the upper member and the base member are each made from an insulating material; wherein when the base member and the upper member are unsecured to each other, the upper member is longitudinally disengeagable from the base member.

11. A method as claimed in claim 10 comprising, after detaching the members,
- sliding the base member and the upper member relative to each other.

12. A method of replacing a power supply rail insulator comprising:
removal of an existing power supply rail insulator; and
detachably securing an upper member of a power supply rail insulator to a base member of a power supply rail insulator device,
**characterised in that** the upper member and the base member are each made from an insulating material; wherein when the base member and the upper member are unsecured to each other, the upper member is longitudinally disengeagable from the base member.

13. A power supply rail insulator kit comprising a power supply rail insulator comprising a base member adapted to be securable to an anchoring surface; an upper member adapted to allow a power supply rail to be securable thereto; wherein the base member and the upper member are arranged to be detachably secured to each other; the kit further comprising fixing means operable to detachably secure the base member and the upper member to each other,
**characterised in that** the upper member and the base member are each made from an insulating material; wherein when the base member and the upper member are unsecured to each other, the upper member is longitudinally disengeagable from the base member.

14. A power supply rail insulator kit comprising a power supply rail insulator or assembly according to any of claims 1 to 7.

## Patentansprüche

1. Isolationsträger (104) für Stromschienen, aufweisend ein Basisglied (106), das dazu geeignet ist, an einer Verankerungsfläche befestigt werden zu können, ein oberes Glied (108), das zum Ermöglichen geeignet ist, dass eine Stromschiene (110) daran befestigt werden kann, wobei das Basisglied (106) und das obere Glied (108) dazu angeordnet sind, abnehmbar aneinander befestigt zu sein,
**dadurch gekennzeichnet, dass** das obere Glied (108) und das Basisglied (106) jeweils aus einem Isoliermaterial hergestellt sind; wobei, wenn das Basisglied (106) und das obere Glied (108) nicht aneinander befestigt sind, das obere Glied (108) längs vom Basisglied (106) lösbar ist.

2. Isolationsträger für Stromschienen nach Anspruch 1, wobei das Basisglied und das obere Glied zusammenwirkende Passflächen aufweisen, die zum Ermöglichen betriebsfähig sind, dass das obere Glied und das Basisglied miteinander in Eingriff treten.

3. Isolationsträger für Stromschienen nach Anspruch 2, wobei die Passflächen bezüglich einer Längsachse der Stromschiene längs verlaufen.

4. Isolationsträger für Stromschienen nach einem der Ansprüche 2 oder 3, wobei die Passflächen Mittel zum Verhindern von Bewegung dazwischen in mindestens einer Seitenrichtung aufweisen.

5. Isolationsträger für Stromschienen nach einem der vorhergehenden Ansprüche, wobei, in einer zusammengebauten unbefestigten Konfiguration und mit einer Stromschiene, die Aufwärtsbewegung des oberen Glieds verhindert, das obere Glied und das Basisglied durch relative Längsbewegung getrennt werden können.

6. Isolationsträgerbaugruppe für Stromschienen, aufweisend einen Isolationsträger für Stromschienen, der ein Basisglied, das an einer Verankerungsfläche befestigt ist, ein oberes Glied, das an einer Stromschiene befestigt ist, aufweist, wobei das Basisglied und das obere Glied abnehmbar aneinander befestigt sind,
**dadurch gekennzeichnet, dass** das obere Glied und das Basisglied jeweils aus einem Isoliermaterial hergestellt sind; wobei, wenn das Basisglied und das obere Glied nicht aneinander befestigt sind, das obere Glied längs vom Basisglied lösbar ist.

7. Isolationsträgerbaugruppe für Stromschienen nach Anspruch 6, wobei das Basisglied und das obere Glied an ihren Oberflächen, die einander zugekehrt sind und miteinander zusammenwirken, eine nach oben geneigte Oberfläche über mindestens einen Teil der zugekehrten Oberflächen hinweg enthalten, wobei die Neigung nach oben in derselben Richtung verläuft, in der ein Leiter angeordnet ist, der mit der Stromschiene in Eingriff gebracht werden soll.

8. Verfahren zum Montieren eines Isolationsträgers für Stromschienen, aufweisend:
- abnehmbares Befestigen eines oberen Glieds eines Isolationsträgers für Stromschienen an einem Basisglied eines Isolationsträgergeräts für Stromschienen,
**dadurch gekennzeichnet, dass** das obere Glied und das Basisglied jeweils aus einem Isoliermaterial hergestellt sind; wobei, wenn das Basisglied und das obere Glied nicht aneinander befestigt sind, das obere Glied längs vom Basisglied lösbar ist.

9. Verfahren nach Anspruch 8, aufweisend das Ausrichten des oberen Glieds am Basisglied durch relatives Verschieben der Glieder.

10. Verfahren zum Auseinanderbauen eines Isolationsträgers für Stromschienen, aufweisend:
- Lösen eines befestigten oberen Glieds eines Isolationsträgers für Stromschienen und eines Basisglieds eines Isolationsträgers für Stromschienen voneinander,
**dadurch gekennzeichnet, dass** das obere Glied und das Basisglied jeweils aus einem Isoliermaterial hergestellt sind; wobei, wenn das Basisglied und das obere Glied nicht aneinander befestigt sind, das obere Glied längs vom Basisglied lösbar ist.

11. Verfahren nach Anspruch 10, aufweisend nach dem Lösen der Glieder voneinander,
- Verschieben des Basisglieds und des oberen Glieds relativ zueinander.

12. Verfahren zum Austauschen eines Isolationsträgers für Stromschienen, aufweisend:
Entfernen eines bestehenden Isolationsträgers für Stromschienen; und
abnehmbares Befestigen eines oberen Glieds eines Isolationsträgers für Stromschienen an einem Basisglied eines Isolationsträgergeräts für Stromschienen,
**dadurch gekennzeichnet, dass** das obere Glied und das Basisglied jeweils aus einem Isoliermaterial hergestellt sind; wobei, wenn das Basisglied und das obere Glied nicht aneinander befestigt sind, das obere Glied längs vom Basisglied lösbar ist.

13. Isolationsträgersatz für Stromschienen, aufweisend einen Isolationsträger für Stromschienen, der ein Basisglied, das dazu geeignet ist, an einer Verankerungsfläche befestigt werden zu können, ein oberes Glied, das zum Ermöglichen geeignet ist, dass eine Stromschiene daran befestigt werden kann, aufweist, wobei das Basisglied und das obere Glied dazu angeordnet sind, abnehmbar aneinander befestigt zu sein, wobei der Satz ferner Befestigungsmittel aufweist, die zum abnehmbaren Befestigen des Basisglieds und des oberen Glieds aneinander betriebsfähig sind,
**dadurch gekennzeichnet, dass** das obere Glied und das Basisglied jeweils aus einem Isoliermaterial hergestellt sind; wobei, wenn das Basisglied und das obere Glied nicht aneinander befestigt sind, das obere Glied längs vom Basisglied lösbar ist.

14. Isolationsträgersatz für Stromschienen, aufweisend einen Isolationsträger für Stromschienen oder eine Baugruppe gemäß einem der Ansprüche 1 bis 7.

## Revendications

1. Isolateur de barre d'alimentation électrique (104) comprenant un élément de base (106) adapté à pouvoir être fixé à une surface d'ancrage ; un élément supérieur (108) adapté à permettre de pouvoir fixer une barre d'alimentation électrique (110) sur celui-ci ; dans lequel l'élément de base (106) et l'élément supérieur (108) sont agencés pour être fixés de façon amovible l'un à l'autre,
**caractérisé par le fait que** l'élément supérieur (108) et l'élément de base (106) sont chacun réalisés en un matériau isolant ; dans lequel lorsque l'élément de base (106) et l'élément supérieur (108) ne sont pas fixés l'un à l'autre, l'élément supérieur (108) peut se dégager longitudinalement de l'élément de base (106).

2. Isolateur de barre d'alimentation électrique selon la revendication 1, dans lequel l'élément de base et l'élément supérieur comprennent des surfaces d'accouplement coopérantes pouvant être actionnées pour permettre l'engagement entre l'élément supérieur et l'élément de base.

3. Isolateur de barre d'alimentation électrique selon la revendication 2, dans lequel les surfaces d'accouplement s'étendent longitudinalement, par rapport à un axe longitudinal de la barre d'alimentation électrique.

4. Isolateur de barre d'alimentation électrique selon la revendication 2 ou la revendication 3, dans lequel les surfaces d'accouplement comprennent des moyens pour empêcher un mouvement entre elles dans au moins une direction latérale.

5. Isolateur de barre d'alimentation électrique selon une quelconque revendication précédente, dans lequel, dans une configuration assemblée, non fixée et avec une barre d'alimentation électrique empêchant le mouvement vers le haut de l'élément supérieur, l'élément supérieur et l'élément de base peuvent être séparés par un mouvement longitudinal relatif.

6. Groupe isolateur de barre d'alimentation électrique comprenant un isolateur de barre d'alimentation électrique comprenant un élément de base fixé à une surface d'ancrage ; un élément supérieur fixé à une barre d'alimentation électrique ; dans lequel l'élément de base et l'élément supérieur sont fixés de façon amovible l'un à l'autre,
**caractérisé par le fait que** l'élément supérieur et l'élément de base sont chacun réalisés en un matériau isolant ; dans lequel lorsque l'élément de base et l'élément supérieur ne sont pas fixés l'un à l'autre, l'élément supérieur peut se dégager longitudinalement de l'élément de base.

7. Groupe isolateur de barre d'alimentation électrique selon la revendication 6, dans lequel l'élément de base et l'élément supérieur comprennent, sur leurs surfaces qui se font face et coopèrent entre elles, une surface inclinée vers le haut sur au moins une partie des surfaces qui se font face, dont l'inclinaison s'étend vers le haut dans le même sens qu'un conducteur est prévu pour être amené à s'engager avec la barre d'alimentation électrique.

8. Procédé d'assemblage d'un isolateur de barre d'alimentation électrique comprenant :
la fixation de façon amovible d'un élément supérieur d'un isolateur de barre d'alimentation électrique à un élément de base d'un dispositif isolateur d'une barre d'alimentation électrique, **caractérisé par le fait que** l'élément supérieur et l'élément de base sont chacun réalisés en un matériau isolant ; dans lequel lorsque l'élément de base et l'élément supérieur ne sont pas fixés l'un à l'autre, l'élément supérieur peut se dégager longitudinalement de l'élément de base.

9. Procédé selon la revendication 8, comprenant l'alignement de l'élément supérieur avec l'élément de base par un glissement relatif des éléments.

10. Procédé de désassemblage d'un isolateur de barre d'alimentation électrique comprenant :
le détachement d'un élément supérieur fixé d'un isolateur de barre d'alimentation électrique et d'un élément de base d'un isolateur d'une barre d'alimentation électrique,
**caractérisé par le fait que** l'élément supérieur et l'élément de base sont chacun réalisés en un matériau isolant ; dans lequel lorsque l'élément de base et l'élément supérieur ne sont pas fixés l'un à l'autre, l'élément supérieur peut se dégager longitudinalement de l'élément de base.

11. Procédé selon la revendication 10, comprenant, après détachement des éléments,
le glissement de l'élément de base et de l'élément supérieur l'un par rapport à l'autre.

12. Procédé de remplacement d'un isolateur de barre d'alimentation électrique comprenant :
le démontage d'un isolateur de barre d'alimentation électrique existant ; et
la fixation de façon amovible d'un élément supérieur d'un isolateur de barre d'alimentation électrique à un élément de base d'un dispositif isolateur d'une barre d'alimentation électrique,
**caractérisé par le fait que** l'élément supérieur et l'élément de base sont chacun réalisés en un matériau isolant ; dans lequel lorsque l'élément de base et l'élément supérieur ne sont pas fixés l'un à l'autre, l'élément supérieur peut se dégager longitudinalement de l'élément de base.

13. Kit d'isolateur de barre d'alimentation électrique comprenant un isolateur de barre d'alimentation électrique comprenant un élément de base adapté à être fixé à une surface d'ancrage ; un élément supérieur adapté à permettre de pouvoir fixer une barre d'alimentation électrique sur celui-ci ; dans lequel l'élément de base et l'élément supérieur sont agencés de façon à être fixés de façon amovible l'un à l'autre ; le kit comprenant en outre des moyens de fixation pouvant être actionnés pour fixer de façon amovible l'élément de base et l'élément supérieur l'un à l'autre,
**caractérisé par le fait que** l'élément supérieur et l'élément de base sont chacun réalisés en un matériau isolant ; dans lequel lorsque l'élément de base et l'élément supérieur ne sont pas fixés l'un à l'autre, l'élément supérieur peut se dégager longitudinalement de l'élément de base.

14. Kit d'isolateur de barre d'alimentation électrique comprenant un isolateur ou un groupe isolateur de barre d'alimentation électrique selon l'une quelconque des revendications de 1 à 7.
